# EUROPEAN PATENT APPLICATION

(11) **EP 2 046 097 A1**
(43) Date of publication of application: **08.04.2009**
(21) Application number: 07790982.8
(22) Date of filing: 19.07.2007
(51) Int. Cl.: H05B 41/24, G03B 21/14, H01J 61/86, H01J 61/88

(54) **SUPER-HIGH PRESSURE MERCURY LAMP**

(30) Priority: 20.07.2006 JP 2006198053
(71) Applicant: Osram Gesellschaft mit beschränkter Haftung, 81543 München (DE)
(72) Inventor: MATSUMOTO, Hideyuki, Yokohama-shi Kanagawa 220-0004 (JP)
(86) International application number: PCT/JP2007/064228
(87) International publication number: WO 2008/010542

(57) **Abstract**

An object is to provide an extra-high pressure mercury lamp in which wear of an electrode is kept small even if a temperature of an electrode on the side of an opening portion of a reflector of an arc tube is increased to be higher than that of an electrode on the side of a neck portion of the reflector to generate a difference in temperature between both electrodes of the arc tube.

An extra-high pressure mercury lamp 10 according to the present invention is an extra-high pressure mercury lamp 10 of AC lighting system provided with an arc tube 1 including a first electrode 3a positioned on the side of an opening portion 20 of a reflector 5 and a second electrode 3b positioned on the side of a neck portion 5a of the reflector 5 and including mercury sealed inside, where, when AC lamp current is supplied to the extra-high pressure mercury lamp 10 to perform lighting, a current pulse having the same polarity as that of the AC lamp current is superimposed on the AC lamp current, and pulse width of the current pulse to the first electrode 3a is made larger than that of the current pulse to the second electrode 3b.

## Description

### TECHNICAL FIELD

The present invention relates to an extra-high pressure mercury lamp used in a projector apparatus.

### BACKGROUND ART

In an extra-high pressure mercury lamp (hereinafter, also called "lamp"), electrode geometry changes to generate deviation of arc spot due to electrode wear of an arc tube. Generally, in a case of an AC lighting system, spot deviation for each cycle is felt as a flicker.

As a way to solve the problem, a method of adding a superimposed pulse to a current waveform for each cycle to increase a temperature of an electrode tip thereby achieving optimization of halogen cycle has been adopted (for example, see Patent Document 1).
Patent Document 1: JP-A-10-501919

### DISCLOSURE OF THE INVENION

### PROBLEM TO BE SOLVED BY THE INVENTION

When the extra-high pressure mercury lamp is combined with a reflector, due to reflected light from an optical system of the projector apparatus, a temperature of an electrode on the side of an opening portion of the reflector of the arc tube is increased to be higher than that of an electrode on the side of a neck portion of the reflector to generate a difference in temperature between both electrodes, which causes normal halogen cycle not to function. The term "halogen cycle" means, for example, that tungsten which is electrode material evaporated from an electrode is returned to an electrode tip to maintain electrode geometry by adding a superimposed pulse to a current waveform for each cycle to increase the temperature of the electrode tip to a proper temperature.

The present invention has been made to solve the above problem, and an object of the present invention is to provide an extra-high pressure mercury lamp in which electrode wear is kept small even if a temperature of an electrode on the side of an opening portion of a reflector of an arc tube is increased to be higher than that of an electrode on the side of a neck portion of the reflector to generate a difference in temperature between both electrodes of the arc tube.

### MEANS FOR SOLVING THE PROBLEM

The extra-high pressure mercury lamp according to the present invention is an extra-high pressure mercury lamp of an AC lighting system comprising an arc tube including a first electrode positioned on the side of an opening portion of a reflector and a second electrode positioned on the side of a neck portion of the reflector, and including mercury sealed inside, wherein, when AC lamp current is supplied to the extra-high pressure mercury lamp to perform lighting, current pulse having the same polarity as polarity of AC lamp current is superimposed onto the AC lamp current to make a pulse width of a current pulse to the first electrode larger than that of a current pulse to the second electrode.

In the extra-high pressure mercury lamp according to the present invention, the ratio of the pulse width of the current pulse to the first electrode to the pulse width of the current pulse to the second electrode is set to 1.9 to 3.0.

### EFFECT OF THE INVENTION

The extra-high pressure mercury lamp according to the present invention can provide an extra-high pressure mercury lamp with reduced electrode wear according to the above configuration.

### BRIEF DESCRIPTION OF THE DRAWINGS

Fig. 1 shows a diagram showing an example of a projector apparatus 100 according to a first embodiment;
Fig. 2 shows a partially broken side view of an extra-high pressure mercury lamp 10 according to the first embodiment;
Fig. 3 shows a sectional view of an arc tube 1 according to the first embodiment; and
Fig. 4 shows a diagram showing a waveform of AC lamp current supplied to the extra-high pressure mercury lamp 10 according to the first embodiment.

### EXPLANATION OF REFERENCE NUMERAL

1: arc tube, 2: sealing portion, 3a: first electrode, 3b: second electrode, 4a: lead wire, 4b: lead wire, 5: reflector, 5a: neck portion, 6a: terminal, 6b: terminal, 7: trigger coil, 8: bulb, 8a: bulb center, 10: extra-high pressure mercury lamp, 11: condenser lens, 12: color foil, 13: lens, 14: total reflection mirror, 15: DMD, 16: projection lens, 20: opening portion.

### BEST MODE FOR CARRYING OUT THE INVENTION

### First Embodiment

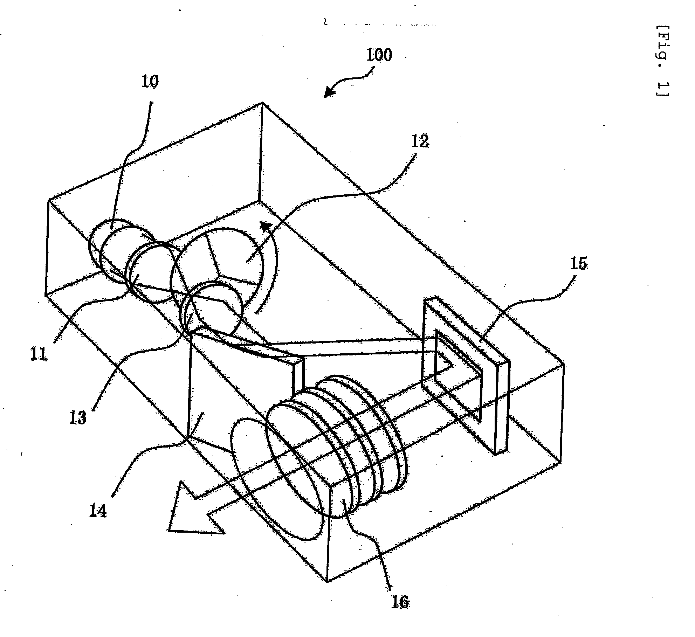

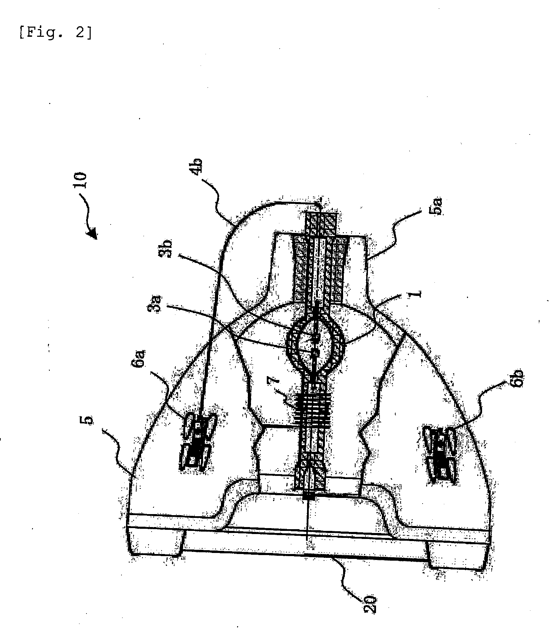

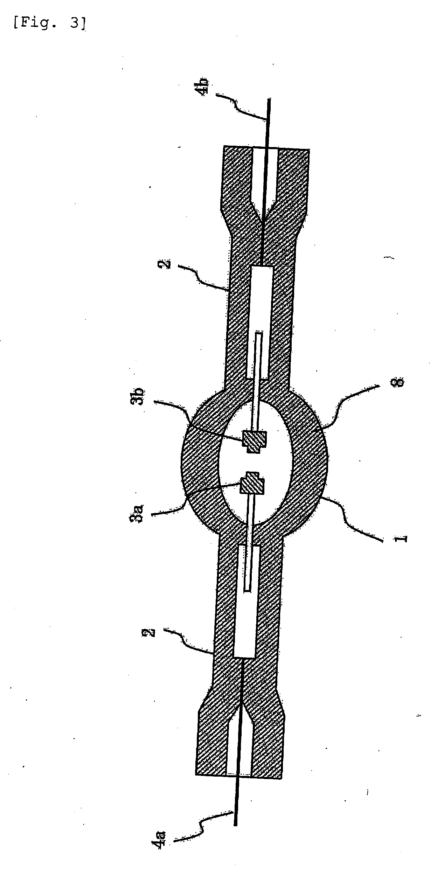

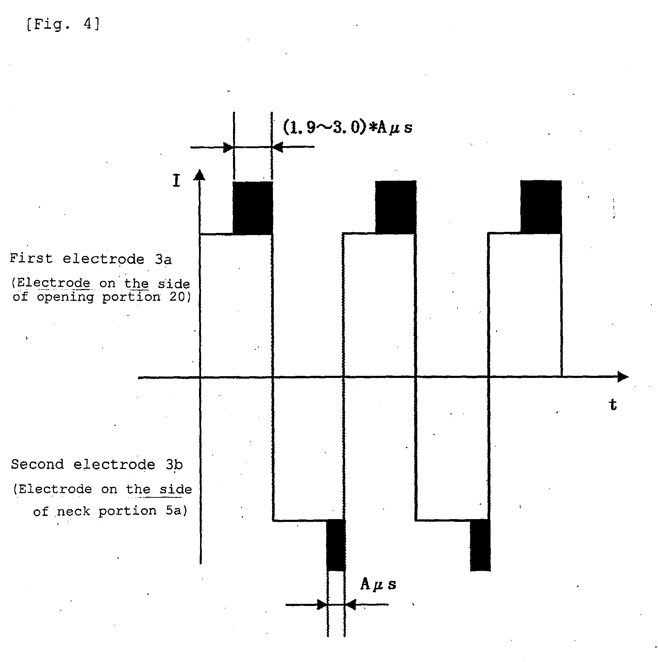

Figs. 1 to 4 show a first embodiment. Fig. 1 shows a diagram showing an example of a projector apparatus 100, Fig. 2 shows a partially broken side view of an extra-high pressure mercury lamp 10, Fig. 3 shows a sectional view of an arc tube 1, and Fig. 4 shows a diagram showing a waveform of AC lamp current supplied to the extra-high pressure mercury lamp 10.

The projector apparatus 100 shown in Fig. 1 is, as an example, a single-panel digital light processing (DLP) projector, which is a projector of an image display system (DLP) utilizing a digital micro-mirror device (DMD) being an angle-controllable micro-mirror. A DMD 15 which is an angle-controllable micro-mirror is disposed, and the mirror is moved at high speed of thousands times per second to draw an image, so that light attenuation is reduced because light is reflected by the mirror. In a single-panel DLP projector using only one DMD 15, a color foil 12 is rotated at high speed to put lights of red, green, and blue to the DMD 15 sequentially so that images corresponding to the respective colors are sequentially displayed.

The projector apparatus 100 includes an extra-high pressure mercury lamp 10 serving as a light source, a condenser lens 11, a color foil 12, a lens 13, a total reflection mirror 14, a DMD 15, and a projection lens 16.

As shown in Fig. 2, in the extra-high pressure mercury lamp 10, the arc tube 1 is fixed such that an optical axis thereof corresponds to a neck portion 5a of a reflector 5 (concave reflecting mirror) having an opening portion 20 for emitting light forward. A terminal 6a connected with a lead wire 4b from an electrode of the arc tube 1 and a terminal 6b are disposed on an outer peripheral face of the reflector 5. A trigger coil 7 for triggering the arc tube 1 is provided on the arc tube 1. A pair of electrodes is provided inside the arc tube 1, where an electrode on the side of the opening portion 20 of the reflector 5 is defined as a first electrode 3a and an electrode on the side of the neck portion 5a of the reflector 5 is defined as a second electrode 3b.

As shown in Fig. 3, the arc tube 1 has a bulb 8 made from fused quartz and sealing portions 2 formed extending to both sides of the bulb 8. Mercury is included inside the bulb 8, and portions of the first electrode 3a and the second electrode 3b are sealed with the sealing portions 2. The lead wire 4a and the lead wire 4b are pulled out of the sealing portions 2.

The extra-high pressure mercury lamp 10 receives reflected light of an optical system of the projector apparatus 100 during lighting in the projector apparatus 100. Therefore, a temperature of the first electrode 3a on the side of the opening portion 20 of the reflector 5 becomes higher than that of the second electrode 3b on the side of the neck portion 5a of the reflector 5.

An example of the temperature of the first electrode 3a and the temperature of the second electrode 3b will be shown below. The temperatures of the first electrode 3a and the second electrode 3b of the arc tube 1 during lighting in the projector apparatus 100 are about 3000°C, for example, in the extra-high pressure mercury lamp 10 of 250 W, the temperature of the first electrode 3a is higher by about 80°C than that of the second electrode 3b. Further, in the extra-high pressure mercury lamp 10 of 300 W, the temperature of the first electrode 3a is higher by about 140°C than that of the second electrode 3b.

Therefore, there is a problem in which electrode wear of the first electrode 3a occurs immediately after lighting.

Then, in the extra-high pressure mercury lamp 10 of an AC lighting system, when AC lamp current is supplied to the extra-high pressure mercury lamp 10 to perform lighting, a current pulse having the same polarity as polarity of the AC lamp current is superimposed on the AC lamp current at a second part of half cycles to make pulse width of the current pulse to the first electrode 3a larger than that of the current pulse of the second electrode 3b to promote a halogen cycle so that electrode wear of the first electrode 3a is suppressed. In this regard, however, the current pulse to be superimposed on the AC lamp current does not need to be superimposed at the second part of half cycles, it may be superimposed at any timing.

An example of how much larger the pulse width of the current pulse to the first electrode 3a is made than that of the current pulse to the second electrode 3b will be shown in Fig. 4. In Fig. 4, the vertical axis is current, the horizontal axis is time, and pulse width superimposed on current of the second electrode 3b (electrode on the side of the neck portion 5a) is A (µs) .

For example, when the pulse width of the current pulse to the first electrode 3a is set to 750 µs, and the pulse width A of the current pulse to the second electrode 3b is set to 250 to 400 µs, electrode wear of the first electrode 3a is suppressed. In this case, the ratio of the pulse width of the current pulse to the first electrode 3a to the pulse width of the current pulse to the second electrode 3b is 1.9 to 3.0.

As described above, when the ratio of the pulse width of the current pulse to the first electrode 3a to the pulse width of the current pulse to the second electrode 3b is set to 1.9 to 3.0, wear of the first electrode 3a can be suppressed. This is attributed to the fact that this pulse mode causes temperature rise of the tip of the first electrode 3a to promote halogen cycle so that electrode wear can be suppressed.

In order to suppress wear of the first electrode 3a on the side of the opening portion 20 of the reflector 5, it is preferable to set the ratio of the pulse width of the current pulse to the first electrode 3a to the pulse width of the current pulse to the second electrode 3b to 1.9 to 3.0, but increase of the pulse width of the current pulse to the first electrode 3a larger than that of the current pulse to the second electrode 3b has effect.

## Claims

1. An extra-high pressure mercury lamp of an AC lighting system, comprising an arc tube including a first electrode positioned on the side of an opening portion of a reflector and a second electrode positioned on the side of a neck portion of the reflector and including mercury sealed inside, wherein
when AC lamp current is supplied to the extra-high pressure mercury lamp to perform lighting, current pulse having the same polarity as that of the AC lamp current is superimposed on the AC lamp current, and
pulse width of the current pulse to the first electrode is made larger than that of the current pulse to the second electrode.

2. The extra-high pressure mercury lamp according to claim 1, wherein the ratio of the pulse width of the current pulse to the first electrode to the pulse width of the current pulse to the second electrode is set to 1.9 to 3.0.
